# FASCICULE DE BREVET EUROPEEN

(11) **EP 2 872 302 B1**
(45) Date de publication et mention de la délivrance du brevet: **01.03.2017**
(21) Numéro de dépôt: 13744693.6
(22) Date de dépôt: 05.07.2013
(51) Int. Cl.: B26D 7/06, B26D 7/14, B26D 1/06, B26D 1/10, B26D 1/02, B26D 1/24, B26D 5/00, B32B 17/10, C03B 33/07

(54) **DISPOSITIF ET PROCEDE DE DECOUPE DE MATIERE PLASTIQUE EN PARTICULIER D'UN VITRAGE FEUILLETE**
VERFAHREN UND VORRICHTUNG ZUM TRENNEN EINES KUNSTSTOFFMATERIALS, INSBESONDERE EINES BESCHICHTETEN GLASIERUNGSELEMENTS
DEVICE AND METHOD FOR CUTTING PLASTIC MATERIAL, IN PARTICULAR A LAMINATED GLAZING ELEMENT

(30) Priorité: 11.07.2012 FR 1256692
(43) Date de publication de la demande: 20.05.2015
(73) Titulaire: Saint-Gobain Glass France, 92400 Courbevoie (FR)
(72) Inventeur: BAQUET, Erwan, 60200 Compiegne (FR); LEVASSEUR, Fabien, 60490 Marest-sur-Matz (FR); MILAMON, Christophe, 60310 Plessis-de-Roye (FR); NUGUE, Jean-Clément, 60260 Lamorlaye (FR)
(74) Mandataire: Saint-Gobain Recherche
(86) Numéro de dépôt international: PCT/FR2013/051600
(87) Numéro de publication internationale: WO 2014/009638

(56) Documents cités:
- EP-A1- 1 382 441
- EP-A1- 2 174 784
- EP-A1- 2 177 329
- EP-A2- 2 087 971

## Description

L'invention concerne un dispositif et un procédé de découpe d'une matière flexible du type matière plastique, feuilletée entre deux substrats, la découpe étant réalisée sur la partie débordante de la matière en périphérie du feuilleté après assemblage des substrats.

L'invention sera plus particulièrement décrite en regard de vitrages en verre feuilleté, sans toutefois y être limitée.

Un vitrage feuilleté comprend au moins deux substrats entre lesquels est disposée au moins une feuille ou film intercalaire en matière plastique, par exemple en polyvinyle de butyral (PVB). Après assemblage du feuilleté, le PVB déborde sur le pourtour du vitrage d'une largeur généralement comprise entre 5 et 40 mm. Il est nécessaire d'ébavurer le débord de matière plastique avant les étapes connues de dégazage et d'autoclave, cette dernière nécessitant l'introduction du vitrage dans une enceinte chauffée.

Actuellement, l'étape d'ébarbage est réalisée soit manuellement à l'aide de moyens de découpe du type cutteur qu'on fait glisser le long de la tranche du vitrage, soit de manière automatisée par des moyens de découpe du type lames ou scies fixées sur des têtes mobiles (ou fixes) qui sont translatées en suivant le bord du vitrage.(ou le long desquelles le verre est convoyé).

Cependant, la découpe reste délicate et il arrive parfois qu'en rasant la tranche du verre avec l'outil de découpe, cela engendre des spliures (écailles de quelques dixièmes de millimètres) constituant malencontreusement des amorces de rupture du verre pendant la transformation, ou bien des problèmes de qualité après fabrication. Le vitrage est alors mis au rebus.

En outre, ce contact de la lame de l'outil de découpe avec le verre engendre une usure prématurée de la lame, voire sa casse.

On connaît par ailleurs de la demande de brevet EP2087971, un système automatisé dont les moyens de découpe fournissent un mouvement oscillant de va-et-vient perpendiculaire aux tranches des substrats.

L'invention a donc pour but de proposer un dispositif et un procédé de découpe d'une matière flexible prise entre deux substrats rigides et faisant saillie au-delà des bords desdits substrats, qui fournit une solution alternative à l'état de la technique sans présenter les inconvénients précités.

Selon l'invention, le dispositif de découpe d'une matière flexible et élastique, du type matière plastique, feuilletée entre deux substrats et débordant des tranches des substrats, comprenant des moyens de découpe, est caractérisé en ce qu'il comporte en outre des moyens de traction agencés en amont des moyens de découpe.

Le terme « amont » qualifie les éléments du dispositif qui sont placés avant d'autres éléments, ces derniers étant par contre qualifiés d'« aval », les éléments amont étant mis en oeuvre dans le procédé de découpe préalablement aux autres éléments leur succédant en aval.

Les moyens de traction ont pour but de tirer, préalablement à la découpe, sur la partie débordante flexible, afin de la maintenir à plat et tendue pour assurer une découpe nette et ajustée, à la distance idoine des tranches des substrats.

Le dispositif utilise ainsi avantageusement la propriété élastique du matériau à découper. En tirant sur le matériau, celui-ci étant dans un état tendu, il peut être découpé à distance du verre et est aisément et efficacement découpé. Puis en relâchant la traction, ledit matériau se rétracte. En ayant optimisé la distance de découpe du matériau à l'état tendu depuis les tranches des substrats, le matériau une fois rétracté devient coplanaire ou sensiblement coplanaire avec les tranches des substrats verriers, c'est-à-dire qu'il ne déborde plus.

L'étirement est localisé et provisoire le temps précédent juste la découpe et le temps de la découpe, car au moment de la découpe, les moyens de traction précédant les moyens de découpe sont déjà en train d'étirer une zone adjacente et aval de la zone en cours de découpe. Par conséquent, les moyens de traction n'agissant plus sur la partie restante de matière découpée et associée au film feuilleté, celle-ci (étant élastique) se rétracte naturellement sans nécessiter de moyens spécifiques.

A noter que le matériau intercalaire peut lui-même être feuilleté et composé par exemple de plusieurs feuilles de matière plastique. Ces feuilles dans la partie de débordement restent suffisamment jointes pour que les faces externes des feuilles extérieures de l'intercalaire soient happées par les moyens de traction, permettant l'étirage de l'ensemble des feuilles.

Selon une caractéristique, les moyens de traction comportent au moins deux pièces rotatives tournant autour d'axes de rotation respectifs et aptes à pincer la partie débordante de matière selon deux faces opposées de ladite partie, et à pivoter sur ces faces lors de leur mouvement rotatif.

De préférence, chaque pièce est agencée de façon que son axe de rotation, d'une part forme un angle d'inclinaison α avec un plan qui est perpendiculaire aux tranches des substrats et en aval de la pièce, ledit angle étant supérieur à 0° et inférieur ou égal à 75°, de préférence d'au plus 30°, en particulier de l'ordre de 10°, et d'autre part est divergent par rapport au sens d'arrivée des moyens de découpe. Ainsi, on assure une préhension ferme de la matière et on garantit un étirement efficace sans plissage, en minimisant la grandeur nécessaire de débordement de la matière pour assurer l'étirement.

Avantageusement, chaque pièce rotative présente un corps à forme conique ou tronconique dont la surface latérale formant les génératrices du cône ou du tronc de cône est destinée à constituer une surface partielle de contact avec l'une des faces de la partie débordante, les surfaces de contact étant parallèles et espacées.

Les pièces rotatives, en particulier les surfaces de contact de celles-ci avec la matière, sont écartées l'une de l'autre, notamment d'une distance d5 adaptée en fonction de l'épaisseur de la partie débordante, du type de matière à découper, de la température ambiante, et du poids du substrat supérieur s'appuyant sur la matière feuilletée, de préférence la distance d5 étant comprise entre 0,05 et 2 mm.

Selon une autre caractéristique, les pièces rotatives tournent dans des sens opposés, et en direction de la partie débordante.

Selon encore une autre caractéristique les axes de rotation des pièces rotatives sont inclinés par rapport à un plan horizontal ou plan général des substrats, d'un angle de préférence de 45°.

Quant aux moyens de découpe, ils sont destinés à être agencés à distance des tranches des substrats, selon une grandeur d1 dans une direction transversale auxdites tranches des substrats de l'ordre de 2,5 mm, en particulier 1,5 mm. En optimisant la distance séparant le verre des moyens de découpe, on garantit que les moyens de découpe ne peuvent toucher le verre lors de la découpe, et la partie restante de la matière après étirement et découpe est ainsi destinée à se rétracter naturellement au niveau des tranches des substrats sans faire saillie.

Par ailleurs, l'extrémité des moyens de traction qui est destinée à être la plus proche des substrats est éloignée des tranches desdits substrats selon une direction transversale à ces dernières d'une distance d2 comprise entre 1,5 et 5 mm, de préférence de l'ordre de 3,5 mm.

Avantageusement, les moyens de traction sont décalés par rapport aux moyens de découpe, dans une direction transversale à la découpe, d'une distance d3 en particulier de l'ordre de 1 mm.

En outre, les moyens de traction sont distants des moyens de découpe, dans la direction de la découpe, d'une grandeur d4 comprise notamment entre 5 et 15 mm, de préférence de l'ordre de 10 mm.

Dans une mode de réalisation préféré, la surface des moyens de traction destinée à être en contact avec la partie débordante est cannelée ou rainurée ou comprend des rugosités ou formes en saillie.

Selon une caractéristique avantageuse, le mouvement des moyens de découpe est asservi à celui des moyens de traction.

L'invention est également relative à un procédé automatisé de découpe d'une matière flexible du type matière plastique, feuilletée entre deux substrats et débordant des tranches des substrats, en particulier de découpe de matière plastique débordant d'un vitrage feuilleté, caractérisé en ce qu'il comporte, avant découpe, une étape d'étirement/d'allongement localisé de la matière.

On entend par « procédé automatisé », un procédé faisant appel à des outils robotisés, contrairement à un procédé manuel.

Avantageusement, le procédé emploie des moyens de traction comprenant au moins deux pièces rotatives agencées en contact et de part et d'autre de la partie débordante, et qu'un mouvement rotatif en sens inverse est appliqué aux pièces, de façon à pincer localement la partie débordante et à l'étirer sensiblement transversalement aux tranches des substrats, un mouvement de translation étant en combinaison imposé au vitrage ou aux moyens de traction.

La vitesse de découpe est contrôlée en fonction de la vitesse de rotation des pièces des moyens de traction.

Dans un mode de réalisation préféré, la vitesse de rotation des pièces des moyens de traction est modifiée au cours de la découpe le long d'un côté du substrat entre deux coins opposés du substrat, de préférence selon trois phases successives qui présentent une première vitesse V1 au démarrage, une seconde vitesse intermédiaire V2, et une troisième vitesse V3 en terminaison de la partie à découper, et de préférence telles que V1 > V2 > V3.

Dans la suite de la description, les qualificatifs « supérieur », « inférieur », d'un élément sont utilisés dans le cadre d'une installation normale du dispositif, c'est-à-dire relatif à une notion verticale par rapport à une surface plate horizontale sur laquelle serait posé le vitrage par l'une de ses faces générales.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue en perspective arrière du dispositif, le vitrage étant agencé à l'avant du dispositif;
- La figure 2 illustre schématiquement en vue de coté les étapes du procédé de découpe de l'invention ;
- La figure 3 illustre une vue de détail et en perspective plongeante du dispositif lors des étapes d'étirement et de découpe
- La figure 4 est une vue schématique de détail, en perspective et de côté du dispositif et montrant un vitrage sans partie débordante de film plastique ;
- La figure 5 est une vue de détail en perspective en face avant du dispositif visible en partie par transparence au travers d'un vitrage ;
- La figure 6 est une vue schématique en coupe de côté des moyens de traction coopérant avec la partie débordante du vitrage ;
- La figure 7 est une vue schématique en coupe de côté des moyens de traction et des moyens de découpe ;
- La figure 8 est une vue en perspective d'un exemple de pièce rotative des moyens de traction ;
- La figure 9 est une vue schématique de dessus d'une variante préférée de positionnement des moyens de traction.

L'invention est relative à un dispositif de découpe et un procédé de découpe via ce dispositif, d'un matériau flexible, en particulier du type polymérique, pris en feuilleté entre deux substrats rigides et débordant au-delà des tranches des substrats au moins le long d'un des côtés.

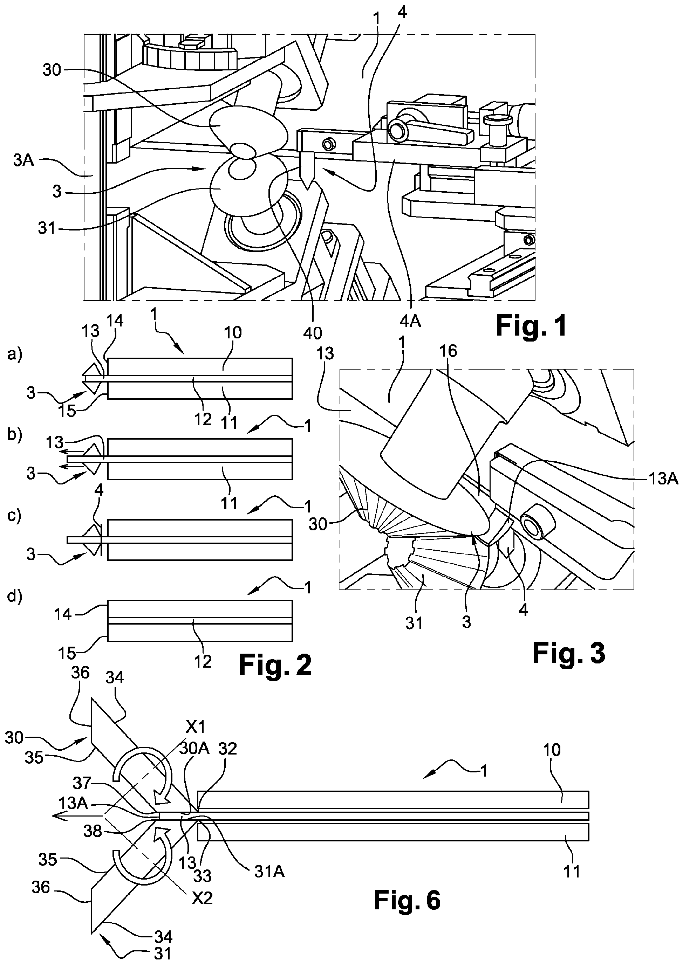

Sans y être limitée, l'invention est décrite au regard d'un vitrage feuilleté 1, visible schématiquement sur les figures 1 à 6, comprenant en regard de la figure 6, deux substrats verriers 10 et 11 et un film intercalaire 12 flexible tel qu'en matière polymérique du type PVB, une partie 13 du film dépassant des tranches 14 et 15 des substrats d'une largeur comprise par exemple entre 5 et 20 mm. La partie débordante 13 s'étend sur au moins tout un côté du vitrage, généralement le long des quatre côtés.

Le dispositif de découpe 2 de l'invention, visible partiellement sur la figure 1, comprend des moyens de support (ici non visibles) du vitrage 1, des moyens de traction 3 de la partie débordante 13 du film intercalaire et des moyens de découpe 4 de ladite partie débordante.

Selon l'invention, le procédé de découpe illustré schématiquement en figure 2 comprend les étapes suivantes :
a) positionnement des moyens de traction,
b) traction de la partie débordante 13 ou étirement de ladite partie via les moyens de traction 3,
c) découpe via les moyens de découpe 4 pour obtenir le résultat visible à l'étape d) montrant la suppression de la partie débordante, le film intercalaire 12 affleurant les tranches 14 et 15 des substrats.

Plus particulièrement, le procédé et le dispositif de l'invention réalisent, tels qu'illustrés sur la figure 3, une traction sur la partie débordante 13 en étant localisée au niveau d'une zone 16 afin d'étirer et tendre cette dernière et la découper quasi-immédiatement.

Les moyens de traction 3 sont agencés en amont des moyens de découpe 4, l'étirement de la partie débordante du film s'effectuant avant la découpe.

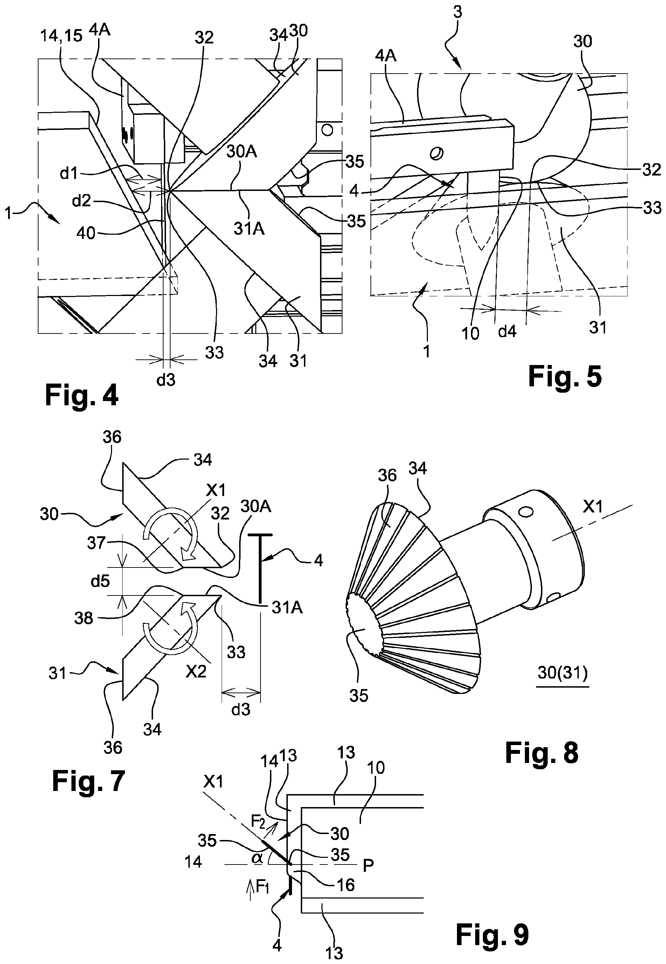

En regard des figures 4 et 5, les moyens de traction 3 et les moyens de découpe 4 sont portés respectivement par des systèmes robotisés 3A, et 4A et sont pilotés par commande électronique, depuis par exemple un automate programmable.

Les moyens de découpe 4 sont agencés à distance des tranches des substrats.

Ils sont mis en oeuvre de manière à réaliser une découpe qui s'étend parallèlement au côté du vitrage (aux tranches des substrats) depuis l'un des coins du vitrage jusqu'au coin opposé.

Pour assurer la traction et la découpe sur l'ensemble d'un côté du vitrage, soit le vitrage est mis en translation tandis que les moyens de traction 3 et de découpe 4 sont fixes par rapport au côté du vitrage, soit le vitrage est fixe et les moyens de traction 3 et de découpe 4 sont translatés en suivant le côté du vitrage avec la même vitesse de translation, de préférence en étant associés à un bâti unique.

Sur une chaîne de fabrication de vitrage, le vitrage se meut en translation sur un convoyeur dans une direction longitudinale. Le dispositif de l'invention comprend alors les éléments suivants :
- de part et d'autre des deux côtés longitudinaux du convoyeur (sens d'avancée du vitrage) est agencée respectivement une paire de moyens de traction et de moyens de découpe, chaque paire étant fixe ; et
- au moins sur l'un des côtés transversaux aux côtés longitudinaux est agencée une paire de moyens de traction et de moyens de découpe qui sont translatés le long de ce côté.

Les moyens de découpe 4 sont constitués par tous moyens connus par l'homme de l'art.

Les moyens de découpe 4 comprennent par exemple un couteau dont la lame tranchante 40 est apte à découper le film par un mouvement de translation dans un seul sens, en direction de la matière non encore découpée. La lame pourrait en variante effectuer un mouvement de va-et-vient.

La lame peut être simple ou profilée ce qui augmente l'efficacité de la découpe.

Dans une autre variante, les moyens de découpe sont formés de disques de cisaillement.

La vitesse d'avancée des moyens de découpe, en particulier via une lame, peut notamment atteindre 1000 mm/s.

Tel que visible sur la figure 4, les moyens de découpe 4 sont agencés à distance du bord du vitrage (des tranches du substrat), cette distance d1 de séparation entre la lame et les tranches des substrats, dans une direction transversale auxdites tranches des substrats, est par exemple de 1,5 mm lorsqu'un étirement de 2 mm de matière est obtenu.

Cette distance d1 de séparation entre la lame et les tranches des substrats est notamment fonction de la grandeur de l'étirement qu'on peut obtenir, de la matière à découper et de la rétractation de ladite matière après étirement et découpe.

En outre, en raison parfois de l'existence de becs de verre en saillie des tranches des substrats, il est préféré d'agencer la lame à au moins 2 mm du bord.

La distance d1 peut varier au cours du procédé, en particulier, pour s'écarter des tranches des substrats si un bec de verre est détecté. Avantageusement, un système de suivi en continu du profil de la tranche des substrats permet de rapprocher au mieux la lame du verre sans risque de contact, tout en assurant en cas de détection d'un bec de verre, un éloignement idoine de la lame depuis la tranche des substrats et cela juste avant l'arrivée de la lame en regard du bec. Après passage du bec, la lame peut être à nouveau rapprochée des substrats.

Les moyens de découpe étant par ailleurs robotisés, il est possible de faire varier la distance en réponse à une détection de défauts sur les tranches du verre afin d'éviter tout contact/choc de la lame avec ces défauts.

Les moyens de traction 3 de l'invention, tels qu'illustrés en particulier sur les figures 1, 3, 4 et 6, comprennent au moins deux pièces rotatives 30 et 31 agencées en regard et à distance l'une de l'autre, et à distance du bord du vitrage.

Les pièces 30 et 31 sont suffisamment rapprochées l'une de l'autre pour être aptes à pincer la partie débordante 13 (figures 3 et 6), l'une des pièces 30 présentant une surface de contact 30A qui porte contre l'une des faces 13A de ladite partie débordante tandis que l'autre pièce 31 présente une surface de contact 31A qui est appliquée contre la face opposée 13B de ladite partie débordante.

La distance de séparation des pièces rotatives correspond à la distance d'écartement d5 des deux surfaces de contact respectives 30A et 31A (figure 7), qui sera détaillée plus loin.

Les pièces rotatives 30 et 31, en étant agencées à distance des tranches 14 et 15 des substrats et de part et d'autre des faces externes 13A et 13B de la partie débordante 13, sont aptes, par leur agencement géométrique et leur rotation, à étirer localement (par rapport à la longueur de la partie débordante le long du côté du vitrage) ladite partie débordante en une zone 16 (visible sur la figure 3) coincée entre lesdites surfaces de contact 30A et 31A des pièces.

En regard des figures 4, 6 et 7, l'extrémité des moyens de traction 3 qui est la plus proche du vitrage, à savoir les extrémités distales respectives 32 et 33 des pièces 30 et 31 faisant face aux substrats et dites extrémités avant, est éloignée des tranches des substrats selon une direction transversale à ces dernières d'une distance d2, qui est par exemple de l'ordre de 3,5 mm. De préférence, cette distance d2 est comprise entre 1,5 et 5 mm.

Par ailleurs, les moyens de découpe 4 sont extrêmement proches des moyens de traction 3, tels que visibles sur les figures 3 à 5.

Plus particulièrement (figures 3 et 7), dans une direction transversale aux tranches des substrats, l'extrémité avant 32, 33 des moyens de traction 3 est décalée par rapport à la lame 40 d'une grandeur d3 de l'ordre de 1 mm. Les moyens de découpe 4 restent néanmoins nécessairement agencés, selon une direction transversale au vitrage, entre ledit vitrage et les moyens de traction 3.

Dans la direction longitudinale au côté du vitrage (figure 4), selon la direction de la découpe, les moyens de traction 3 sont distants des moyens de découpe 4 d'une grandeur d4 comprise de préférence entre 5 et 15 mm, de préférence de l'ordre de 10 mm. La découpe quasi-immédiate de la matière peut ainsi se faire dans la zone étirée 16 (figure 3).

Avantageusement selon l'invention, en regard des figures 3 et 6 à 8, chaque pièce rotative 30, 31 possède un corps de forme conique ou tronconique apte à tourner autour de son axe de fixation et de rotation X1, respectivement X2.

En variante, les corps peuvent être cylindriques. Néanmoins, la forme tronconique des pièces permet des les avancer au plus près du vitrage.

Le corps tronconique de chaque pièce montre, vu en coupe dans un plan contenant l'axe de rotation, la forme d'un trapèze avec une grande base 34, une petite base opposée 35 et des génératrices reliant les deux bases pour former la surface latérale conique ou de tronc de cône 36. En rotation de la pièce 30, 31, la surface latérale 36 est destinée à être en contact partiel selon la surface 30A, respectivement 31 A, avec la zone localisée 16 de la partie débordante 13.

En regard des figures 6 et 7, les pièces 30 et 31 sont agencées par rapport au plan général horizontal du vitrage de sorte que les axes de rotation X1 et X2 forment un angle compris entre 0° et 70°, de préférence égal à 45°.

De plus, elles sont disposées en regard de façon que les surfaces 30A et 31A destinées à être en contact avec les faces externes 13A et 13B de la partie débordante du film soient parallèles et écartées de la distance d5 (figure 7) déjà mentionnée plus haut. Cette distance est adaptée pour coincer la matière de la partie débordante 13.

La distance d'écartement d5 des deux surfaces de contact respectives 30A et 31A est adaptée en fonction de l'épaisseur de la partie débordante, du type de matière à découper (l'élasticité de la matière étant différente selon sa composition), et de la température ambiante, la matière polymérique se déformant en fonction de la température, ainsi que du poids du substrat supérieur 10 s'appuyant sur le film 11.

La distance d'écartement d5 entre les deux surfaces de contact 30A et 31A est notamment comprise entre 0,03 mm et 1,3 mm pour des températures considérées entre 16 et 22°C et des épaisseurs de PVB, en particulier standard, comprises entre 0,38 et 1,52 mm.

A titre d'exemples, la distance d'écartement est de 0,05 mm pour du PVB standard de 0,38 mm d'épaisseur, à une température ambiante de 20°C lors de la mise en oeuvre du procédé de découpe ; elle est de 0,4 mm pour du PVB standard de 0,76 mm à 20°C.

Pour assurer le pincement et l'étirement de la partie débordante, un mouvement de rotation en sens inverse est imposé à chacune des pièces 30 et 31, le sens de rotation de l'une des pièces étant dirigé vers l'autre pièce en regard. Ainsi, le sens de rotation de chacune des pièces est respectivement dirigé vers chacune des faces 13A, 13B de la partie débordante 13 du film.

En outre, de manière préférée selon l'invention, la traction est assurée et optimisée par l'agencement géométrique des pièces rotatives par rapport à la perpendiculaire verticale aux tranches des substrats. En particulier, tel qu'illustré sur la figure 9 schématique en tant que vue de dessus du vitrage et du dispositif en cours de découpe (seule est visible ici la pièce 30), chaque pièce 30, 31 est agencée de manière préférée de façon que son axe de rotation X1, X2, d'une part forme un angle α avec un plan P qui est perpendiculaire aux tranches 14, 15 des substrats et au plan général horizontal du vitrage, et considéré en aval de la pièce, et d'autre part est divergent par rapport au sens d'arrivée selon la flèche F1 des moyens de découpe 4.

Chaque pièce est inclinée de façon que son extrémité arrière 34 soit disposée à l'opposé des moyens de découpe 4, l'extrémité arrière 34 étant plus éloignée que l'extrémité avant 35, permettant de dégager l'espace du côté de l'arrivée des moyens de découpe. En outre, l'inclinaison favorise un étirement vers l'opposé (flèche F2) des moyens de découpe, étirant parfaitement la zone 16 de la matière pour en assurer immédiatement la découpe.

Les pièces 30 et 31 par leur axe de rotation ne sont donc pas strictement perpendiculaires aux tranches des substrats. L'angle α est supérieur à 0° et inférieur ou égal à 75°, de préférence d'au plus 30°, en particulier de l'ordre de 10°.

Cet angle α constitue un « angle d'attaque » engendrant avec la rotation des pièces une force de traction permettant de minimiser la surface de préhension nécessaire à l'allongement de la matière élastique et garantissant un étirement efficace sans plissage.

Par ailleurs, la forme tronconique des pièces engendre pour chacune d'elles, une vitesse distincte au niveau d'une part de leur extrémité avant 32, respectivement 33, correspondant à la grande base 34, et d'autre part de leur extrémité arrière 37, respectivement 38, correspondant à sa petite base 35. Cette différence de vitesse engendre avantageusement une meilleure traction dans la zone de découpe.

La prise en tenaille de la partie débordante 13 par les deux pièces rotatives 30 et 31, combinée à la dissymétrie de vitesse entre les deux extrémités avant et arrière du corps de chacune des pièces engendre un pincement et un étirement localisé selon une direction opposée au vitrage (aux substrats), avec un effort que subit la matière réparti selon toute la surface de contact 30A et 31 A des pièces rotatives.

En combinaison à la rotation des pièces 30 et 31, un mouvement de translation est imposé le long de la partie débordante 13 soit par la translation des moyens de traction, soit par la translation du vitrage, ce qui entraîne l'étirement du matériau dans la direction d'éloignement du vitrage en suivant parallèlement le côté du vitrage. Au fur et à mesure de cet étirement et du mouvement de translation, la découpe est opérée en suivant également le même mouvement de translation.

A titre d'exemple, la vitesse de rotation des pièces est de l'ordre de 330 tr/min tandis que la vitesse de translation est de l'ordre de 600 mm/s. La vitesse de translation est adaptée à la vitesse de rotation, en particulier en diminuant la vitesse de rotation, on diminuera la vitesse de translation.

Enfin, avantageusement les surfaces latérales 36 des pièces peuvent être cannelées, rainurées ou comprendre des picots afin d'optimiser la l'accroche des pièces rotatives en métal sur la matière plastique.

Le procédé de découpe est à présent décrit.

Le vitrage 1 est supporté horizontalement par des moyens connus en soi.

Les moyens de traction 3 sont mis en route en amont d'un coin du vitrage parallèlement au côté à découper et à proximité immédiate de la partie débordante du film, de quelques millimètres, voire plus, afin que les pièces atteignent leur vitesse nominale. L'espace d'écartement entre les deux pièces est situé de manière coplanaire à l'intercalaire polymérique.

Les pièces 30 et 31 tournent, tout en étant translatées ou bien tout en restant fixes par rapport au vitrage, le vitrage étant alors translaté. En avançant en direction de la partie débordante, les pièces happent cette dernière lorsqu'elles viennent en contact de part et d'autre de chacune des faces 13A, 13B de ladite partie.

L'étirement se produit. En raison de la translation concomitante des moyens de découpe 4, ceux-ci rentrent en contact avec la zone étirée 16 pour la découper.

La translation des pièces rotatives et des moyens de découpe se poursuit sur l'ensemble du côté jusqu'au coin opposé du vitrage.

Si le côté du vitrage transversal au dernier coin découpé doit également être ébarbé, l'ensemble des systèmes robotisés 3A et 4A est déplacé pour être mis en vis-à-vis avec le nouveau côté à découper.

Concernant les vitesses de rotation et translation des pièces et de translation des moyens de découpe, celles-ci sont optimisées en fonction du matériau à découper, de la température de la matière et de son épaisseur, et des endroits de découpe sur tout un côté.

En particulier, la vitesse de rotation de chacune des pièces (la vitesse étant la même pour chaque pièce) des moyens de traction peut être modifiée au cours de la découpe le long d'un côté du substrat entre deux coins opposés du substrat, par exemple et de préférence selon trois phases successives qui présentent une première vitesse V1 au démarrage, une seconde vitesse intermédiaire V2, et une troisième vitesse V3 en terminaison de la partie à découper, et telles que V1 > V2 > V3.

## Revendications

1. Dispositif de découpe d'une matière flexible du type matière plastique, feuilletée entre deux substrats et débordant des tranches des substrats, comprenant des moyens de découpe (4), **caractérisé en ce qu'**il comporte en outre des moyens de traction (3) aptes à tirer sur la partie débordante de la matière flexible et agencés en amont des moyens de découpe.

2. Dispositif selon la revendication 1, **caractérisé en ce que** les moyens de traction (3) comportent au moins deux pièces rotatives (30, 31) tournant autour d'axes de rotation respectifs (X1, X2) et aptes à pincer la partie débordante (13) de matière selon deux faces opposées (13A, 13B) de ladite partie, et à pivoter sur ces faces lors de leur mouvement rotatif.

3. Dispositif selon la revendication précédente, **caractérisé en ce que** chaque pièce (30, 31) est agencée de façon que son axe de rotation (X1, X2), d'une part forme un angle d'inclinaison α avec un plan qui est perpendiculaire aux tranches des substrats et en aval de la pièce, ledit angle étant supérieur à 0° et inférieur ou égal à 75°, de préférence d'au plus 30°, en particulier de l'ordre de 10°, et d'autre part est divergent par rapport au sens d'arrivée des moyens de découpe.

4. Dispositif selon l'une quelconque des revendications 2 à 3, **caractérisé en ce que** chaque pièce rotative (30, 31) présente un corps à forme conique ou tronconique dont la surface latérale (36) formant les génératrices du cône ou du tronc de cône est destinée à constituer une surface partielle de contact (30A, 31A) avec l'une des faces de la partie débordante, les surfaces de contact (30A, 31 A) étant parallèles et espacées.

5. Dispositif selon l'une quelconque des revendications 2 à 4, **caractérisé en ce que** les pièces rotatives (30, 31), en particulier les surfaces de contact (30A, 31A) sont écartées l'une de l'autre, notamment d'une distance (d5) adaptée en fonction de l'épaisseur de la partie débordante, du type de matière à découper, de la température ambiante, et du poids du substrat supérieur s'appuyant sur la matière feuilletée, de préférence la distance (d5) étant comprise entre 0,05 et 2 mm.

6. Dispositif selon l'une quelconque des revendications 2 à 5, **caractérisé en ce que** les pièces rotatives (30, 31) tournent dans des sens opposés, et en direction de la partie débordante.

7. Dispositif selon l'une quelconque des revendications 2 à 6, **caractérisé en ce que** les axes de rotation (X1, X2) des pièces rotatives (30, 31) sont inclinés par rapport à un plan horizontal ou plan général des substrats, d'un angle de préférence de 45°.

8. Dispositif selon l'une quelconque des revendications précédentes, **caractérisé en ce que** les moyens de découpe (4) sont destinés à être agencés à distance des tranches des substrats, selon une grandeur (d1) dans une direction transversale auxdites tranches des substrats de l'ordre de 2,5 mm, en particulier 1,5 mm.

9. Dispositif selon l'une quelconque des revendications précédentes, **caractérisé en ce que** l'extrémité des moyens de traction (3) qui est destinée à être la plus proche des substrats est éloignée des tranches desdits substrats selon une direction transversale à ces dernières d'une distance (d2) comprise entre 1,5 et 5 mm, de préférence de l'ordre de 3,5 mm.

10. Dispositif selon l'une quelconque des revendications précédentes, **caractérisé en ce que** les moyens de traction (3) sont décalés par rapport aux moyens de découpe (4), dans une direction transversale à la découpe, d'une distance (d3) de l'ordre de 1 mm.

11. Dispositif selon l'une quelconque des revendications précédentes, **caractérisé en ce que** les moyens de traction (3) sont distants des moyens de découpe (4), dans la direction de la découpe, d'une grandeur (d4) comprise entre 5 et 15 mm, de préférence de l'ordre de 10 mm.

12. Dispositif selon l'une quelconque des revendications précédentes, **caractérisé en ce que** la surface des moyens de traction (3) destinée à être en contact avec la partie débordante est cannelée ou rainurée ou comprend des rugosités ou formes en saillie.

13. Dispositif selon l'une quelconque des revendications précédentes, **caractérisé en ce que** le mouvement des moyens de découpe (4) est asservi à celui des moyens de traction (3).

14. Procédé automatisé de découpe d'une matière flexible du type matière plastique, feuilletée entre deux substrats et débordant des tranches des substrats, **caractérisé en ce qu'**il comporte avant découpe une étape d'étirement localisé de la matière.

15. Procédé selon la revendication précédente ou utilisant un dispositif selon l'une quelconque des revendications 1 à 13, **caractérisé en ce qu'**il emploie des moyens de traction comprenant au moins deux pièces rotatives agencées en contact et de part et d'autre de la partie débordante, et qu'un mouvement rotatif en sens inverse est appliqué aux pièces, de façon à pincer localement la partie débordante et à l'étirer sensiblement transversalement aux tranches des substrats, un mouvement de translation étant en combinaison imposé au vitrage ou aux moyens de traction.

16. Procédé selon la revendication précédente, **caractérisé en ce que** la vitesse de découpe est contrôlée en fonction de la vitesse de rotation des pièces des moyens de traction.

17. Procédé selon la revendication 15 ou 16, **caractérisé en ce que** la vitesse de rotation des pièces des moyens de traction est modifiée au cours de la découpe le long d'un côté du substrat entre deux coins opposés du substrat, de préférence selon trois phases successives qui présentent une première vitesse V1 au démarrage, une seconde vitesse intermédiaire V2, et une troisième vitesse V3 en terminaison de la partie à découper, et de préférence telles que V1 > V2 > V3.

## Patentansprüche

1. Vorrichtung zum Schneiden eines biegsamen Stoffs von der Art Kunststoff, im Verbund zwischen zwei Substraten und über die Schmalseiten der Substrate überstehend, die Schneideinrichtungen (4) enthält, **dadurch gekennzeichnet, dass** sie außerdem Zieheinrichtungen (3) aufweist, die am überstehenden Teil des biegsamen Stoffs ziehen können und stromaufwärts vor den Schneideinrichtungen angeordnet sind.

2. Vorrichtung nach Anspruch 1, **dadurch gekennzeichnet, dass** die Zieheinrichtungen (3) mindestens zwei drehende Bauteile (30, 31) aufweisen, die um jeweilige Drehachsen (X1, X2) drehen und fähig sind, den überstehenden Stoffteil (13) gemäß zwei gegenüberliegenden Seiten (13A, 13B) des Teils einzuklemmen, und bei ihrer Drehbewegung auf diese Seiten zu schwenken.

3. Vorrichtung nach dem vorhergehenden Anspruch, **dadurch gekennzeichnet, dass** jedes Bauteil (30, 31) so angeordnet ist, dass seine Drehachse (X1, X2) einerseits einen Neigungswinkel α mit einer Ebene bildet, die lotrecht zu den Schmalseiten der Substrate und stromabwärts hinter dem Bauteil liegt, wobei der Winkel größer als 0° und kleiner als oder gleich 75° ist, vorzugsweise höchstens 30°, insbesondere in der Größenordnung von 10°, anderseits bezüglich der Ankunftsrichtung der Schneideinrichtungen divergiert.

4. Vorrichtung nach einem der Ansprüche 2 bis 3, **dadurch gekennzeichnet, dass** jedes drehende Bauteil (30, 31) einen kegel- oder kegelstumpfförmigen Körper aufweist, dessen die Mantellinien des Kegels oder des Kegelstumpfs bildende Seitenfläche (36) dazu bestimmt ist, eine Teilkontaktfläche (30A, 31A) mit einer der Seiten des überstehenden Teils zu bilden, wobei die Kontaktflächen (30A, 31A) parallel und beabstandet sind.

5. Vorrichtung nach einem der Ansprüche 2 bis 4, **dadurch gekennzeichnet, dass** die drehenden Bauteile (30, 31), insbesondere die Kontaktflächen (30A, 31A), voneinander entfernt sind, insbesondere um einen geeigneten Abstand (d5) abhängig von der Dicke des überstehenden Teils, von der Art des zu schneidenden Stoffs, von der Umgebungstemperatur und vom Gewicht des oberen Substrats, das auf dem Verbundstoff aufliegt, wobei der Abstand (d5) vorzugsweise zwischen 0,05 und 2 mm liegt.

6. Vorrichtung nach einem der Ansprüche 2 bis 5, **dadurch gekennzeichnet, dass** die drehenden Bauteile (30, 31) in Gegenrichtungen und in Richtung des überstehenden Teils drehen.

7. Vorrichtung nach einem der Ansprüche 2 bis 6, **dadurch gekennzeichnet, dass** die Drehachsen (X1, X2) der drehenden Bauteile (30, 31) bezüglich einer waagrechten Ebene oder allgemeinen Ebene der Substrate um einen Winkel von vorzugsweise 45° geneigt sind.

8. Vorrichtung nach einem der vorhergehenden Ansprüche, **dadurch gekennzeichnet, dass** die Schneideinrichtungen (4) dazu bestimmt sind, in Abstand von den Schmalseiten der Substrate gemäß einer Größe (d1) in einer Querrichtung zu den Schmalseiten der Substrate in der Größenordnung von 2,5 mm, insbesondere 1,5 mm, angeordnet zu sein.

9. Vorrichtung nach einem der vorhergehenden Ansprüche, **dadurch gekennzeichnet, dass** das Ende der Zieheinrichtungen (3), das dazu bestimmt ist, den Substraten am nächsten zu sein, von den Schmalseiten der Substrate gemäß einer Querrichtung zu diesen letzteren um einen Abstand (d2) zwischen 1,5 und 5 mm, vorzugsweise in der Größenordnung von 3,5 mm, entfernt ist.

10. Vorrichtung nach einem der vorhergehenden Ansprüche, **dadurch gekennzeichnet, dass** die Zieheinrichtungen (3) bezüglich der Schneideinrichtungen (4) in einer Querrichtung zum Schnitt um einen Abstand (d3) in der Größenordnung von 1 mm versetzt sind.

11. Vorrichtung nach einem der vorhergehenden Ansprüche, **dadurch gekennzeichnet, dass** die Zieheinrichtungen (3) von den Schneideinrichtungen (4) in der Schneiderichtung um eine Größe (d4) entfernt sind, die zwischen 5 und 15 mm liegt, vorzugsweise in der Größenordnung von 10 mm.

12. Vorrichtung nach einem der vorhergehenden Ansprüche, **dadurch gekennzeichnet, dass** die Fläche der Zieheinrichtungen (3), die dazu bestimmt ist, mit dem überstehenden Teil in Kontakt zu sein, gerieft oder gerillt ist oder Rauigkeiten oder vorstehende Formen enthält.

13. Vorrichtung nach einem der vorhergehenden Ansprüche, **dadurch gekennzeichnet, dass** die Bewegung der Schneideinrichtungen (4) auf diejenige der Zieheinrichtungen (3) geregelt ist.

14. Automatisiertes Verfahren zum Schneiden eines biegsamen Stoffs von der Art Kunststoff, im Verbund zwischen zwei Substraten und über die Schmalseiten der Substrate überstehend, **dadurch gekennzeichnet, dass** es vor dem Schneiden einen Schritt des lokalisierten Dehnens des Stoffs aufweist.

15. Verfahren nach dem vorhergehenden Anspruch oder das eine Vorrichtung nach einem der Ansprüche 1 bis 13 verwendet, **dadurch gekennzeichnet, dass** es Zieheinrichtungen verwendet, die mindestens zwei drehende Bauteile enthalten, die in Kontakt mit und zu beiden Seiten des überstehenden Teils angeordnet sind, und dass eine Drehbewegung in Gegenrichtung auf die Bauteile angewendet wird, um den überstehenden Teil lokal einzuklemmen und ihn im Wesentlichen quer zu den Schmalseiten der Substrate zu dehnen, wobei eine Translationsbewegung in Kombination der Verglasung oder den Zieheinrichtungen auferlegt wird.

16. Verfahren nach dem vorhergehenden Anspruch, **dadurch gekennzeichnet, dass** die Schneidegeschwindigkeit abhängig von der Drehgeschwindigkeit der Bauteile der Zieheinrichtungen gesteuert wird.

17. Verfahren nach Anspruch 15 oder 16, **dadurch gekennzeichnet, dass** die Drehgeschwindigkeit der Bauteile der Zieheinrichtungen während des Schneidens entlang einer Seite des Substrats zwischen zwei gegenüberliegenden Ecken des Substrats vorzugsweise gemäß drei aufeinanderfolgenden Phasen verändert wird, die eine erste Geschwindigkeit V1 beim Start, eine zweite Zwischengeschwindigkeit V2 und eine dritte Geschwindigkeit V3 am Ende des zu schneidenden Teils und vorzugsweise derart aufweist, dass gilt V1 > V2 > V3.

## Claims

1. A device for cutting a flexible material of plastic type, laminated between two substrates and overhanging the edges of the substrates, comprising cutting means (4), **characterized in that** it additionally comprises pulling means (3) suitable for pulling on the overhanging portion of the flexible material and arranged upstream of the cutting means.

2. The device as claimed in claim 1, **characterized in that** the pulling means (3) comprise at least two rotating parts (30, 31) that rotate about respective axes of rotation (X1, X2) and that are suitable for clamping the overhanging portion (13) of material along two opposite faces (13A, 13B) of said portion, and for pivoting over these faces during the rotational movement thereof.

3. The device as claimed in the preceding claim, **characterized in that** each part (30, 31) is arranged so that its axis of rotation (X1, X2) firstly forms an angle of inclination α with a plane that is perpendicular to the edges of the substrates and downstream of the part, said angle being greater than 0° and less than or equal to 75°, preferably at most 30°, in particular of the order of 10° and secondly is divergent with respect to the direction of arrival of the cutting means.

4. The device as claimed in either one of claims 2 and 3, **characterized in that** each rotating part (30, 31) has a conical or frustoconical body, the lateral surface (36) of which, forming the generatrices of the cone or of the conical frustum, is intended to form a partial contact area (30A, 31 A) with one of the faces of the overhanging portion, the contact areas (30A, 31A) being parallel and spaced apart.

5. The device as claimed in any one of claims 2 to 4, **characterized in that** the rotating parts (30, 31), in particular the contact areas (30A, 31 A), are spaced apart from one another, especially by a distance (d5) that is adjusted as a function of the thickness of the overhanging portion, of the type of material to be cut, of the ambient temperature and of the weight of the upper substrate pressing on the laminated material, preferably the distance (d5) being between 0.05 and 2 mm.

6. The device as claimed in any one of claims 2 to 5, **characterized in that** the rotating parts (30, 31) rotate in opposite directions, and in the direction of the overhanging portion.

7. The device as claimed in any one of claims 2 to 6, **characterized in that** the axes of rotation (X1, X2) of the rotating parts (30, 31) are inclined with respect to a horizontal plane or general plane of the substrates, by an angle preferably of 45°.

8. The device as claimed in any one of the preceding claims, **characterized in that** the cutting means (4) are intended to be arranged at a distance from the edges of the substrates, in accordance with a value (d1) in a direction transverse to said edges of the substrates of the order of 2.5 mm, in particular 1.5 mm.

9. The device as claimed in any one of the preceding claims, **characterized in that** the end of the pulling means (3) which is intended to be the closest to the substrates is separated from the edges of said substrates along a direction transverse to the latter by a distance (d2) of between 1.5 and 5 mm, preferably of the order of 3.5 mm.

10. The device as claimed in any one of the preceding claims, **characterized in that** the pulling means (3) are offset with respect to the cutting means (4), in a direction transverse to the cutting, by a distance (d3) of the order of 1 mm.

11. The device as claimed in any one of the preceding claims, **characterized in that** the pulling means (3) are separated from the cutting means (4), in the cutting direction, by a distance having a value (d4) of between 5 and 15 mm, preferably of the order of 10 mm.

12. The device as claimed in any one of the preceding claims, **characterized in that** the surface of the pulling means (3) intended to be in contact with the overhanging portion is ribbed or grooved or comprises roughnesses or protruding shapes.

13. The device as claimed in any one of the preceding claims, **characterized in that** the movement of the cutting means (4) is controlled by that of the pulling means (3).

14. An automated process for cutting a flexible material of plastic type, laminated between two substrates and overhanging the edges of the substrates, **characterized in that** it comprises, before cutting, a step of localized stretching of the material.

15. The process as claimed in the preceding claim or that uses a device as claimed in any one of claims 1 to 13, **characterized in that** it uses pulling means comprising at least two rotating parts arranged in contact and on either side of the overhanging portion, and that a rotational movement in the opposite direction is applied to the parts, so as to locally clamp the overhanging portion and stretch it substantially transversely to the edges of the substrates, a translational movement being, in combination, imposed on the glazing or on the pulling means.

16. The process as claimed in the preceding claim, **characterized in that** the cutting speed is controlled as a function of the rotational speed of the parts of the pulling means.

17. The process as claimed in claim 15 or 16, **characterized in that** the rotational speed of the parts of the pulling means is modified during the cutting along one side of the substrate between two opposite corners of the substrate, preferably in accordance with three successive phases that have a first speed V1 on starting up, a second intermediate speed V2, and a third speed V3 on finishing the portion to be cut, and preferably such that V1 > V2 > V3.
